# EUROPEAN PATENT APPLICATION

(11) **EP 1 340 772 A1**
(43) Date of publication of application: **03.09.2003**
(21) Application number: 02290492.4
(22) Date of filing: 28.02.2002
(51) Int. Cl.: C08B 37/10, A61L 33/08

(54) **Nitro-derivatives of epoxyheparin**

(71) Applicant: Nicox S.A., 06906 Sophia Antipolis Cédex (FR)
(72) Inventor: Bolla, Manlio, 20138 Milano (IT); Monopoli, Angela, 20144 Milano (IT); Del Soldato, Piero, 20152 Monza (IT); Torri, Giangiacomo, 20133 Milano (IT); Naggi, Annamaria, 20025 Legnano (IT); Casu, Benito, 20133 Milano (IT)
(74) Representative: Barchielli, Giovanna

(57) **Abstract**

The present invention relates to heparin, heparin fragments and heparin mimetics, functionalized by introduction of nitro groups and formation of epoxy groups.

It also relates to the process for their preparation comprising the following steps:
a. introduction of an epoxy functionality on positions 2,3 of the uronic acid;
b. nitration of the epoxyheparin obtained in step a.

## Description

### Technical Field

The present invention relates to new functionalized heparin for use in the preparation of materials presenting an anti proliferating activity in surgical devices.

The compounds according to the invention are derivatives of heparin functionalized by formation of epoxide groups and nitro groups.

### Background Art

It is known the anti-thrombotic activity of heparin, that makes it suitable to come in contact with biological fluids or tissues. Heparin is constituted by disaccharidic repetitive unities containing a residue of uronic acid and a residue of hexosamine.

The prevalent repetitive unities of heparin are represented in scheme 1 wherein n usually varies from 8 to 35.

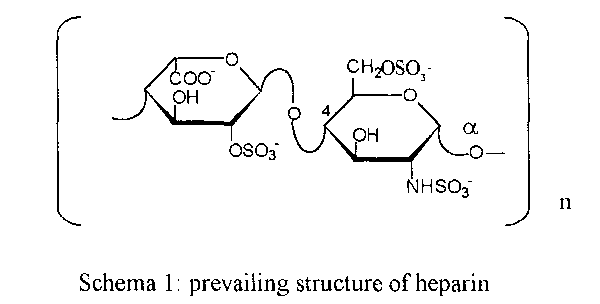

It is known the use of heparin as agent to be supported on the surface of polymer materials in order to improve their compatibility with organic tissues or fluids. For example in US 4,987,181 depolymerized heparin is covalently bonded to an olefin copolymer. The resulting product is then used as adhesive film to be applied on polymeric surfaces that must come in contact with organic fluids or tissues. In such process the depolymerization is useful to create the functional group necessary to the formation of the covalent bond, but it also gives rise to the decrease of some biological activities, such as the anti coagulant activity. In US 5,541,305 it is obtained a material compatible with blood by heparinizing with alkali salts of heparin sulphate groups a polymer having quaternary amino groups.

WO 99/27976 discloses a polymer material with high compatibility with organic fluids and tissues comprising a basic polymer which is covalently bonded to molecules of glycosaminoglycanes. The glycosaminoglycanes are bonded to the polymer through functionalization by formation of amino or epoxy groups.

The functionalization of polysaccharides with groups capable of releasing nitric oxide has been proposed in US 6,261,594. It discloses a nitric oxide donor comprising a modified chitosan polymer and a nitric oxide dimer (N₂O₂) directly bonded to the polymer backbone.

The object of the present invention is the provision of new functionalized heparin comprising epoxy functionalities and nitro functionalities. These compounds are easily fixed onto surfaces comprising functional groups and make them not only highly compatible with organic fluids or tissues, but also active against cell proliferation that takes place after surgical insertion of the same in the human body.

Another object of the present invention is the provision of a simple process for the production of said materials.

### Description of the Invention

The compounds object of the present invention having anti-inflammatory, non thrombogenic surfaces with an enhanced compatibility with organic fluids and tissues, are heparin, heparin fragments or heparin mimetics functionalized by introduction of nitro groups and formation of epoxy groups.

The epoxy group can be used to covalently bond heparin to a substrate which contains functional groups (e.g. amino groups, hydroxyl groups, etc).

The covalent bond is preferably formed through an amination reaction of the epoxy groups obtained on the uronic acid residues with ammonia or primary amines; more preferably the amination reaction is made with ammonia.

In alternative, the polysaccharide can be covalently bonded to the basic polymer through the use of spacers of general formula T-R^{II}-T wherein: R^{II} is selected from the group comprising: linear or branched C₁-C₂₀ alkylene, C₄-C₂₀ cycloalkylene, C₆-C₂₀ arylene, C₇-C₂₀ arylalkylene; T is selected from the group comprising: NR^{I}₂, Si(OR^{I})₃, COR^{III}, OR^{I}, X, 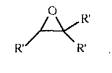 wherein R^{III} is selected from the group comprising: Cl, Br, I.

T can also represent a group from which through simple reactions it is possible to obtain one of the groups described, in case the compound T-R^{II}-T does not prove to be stable. For example compounds of formula NH₂-(CH₂)ₙCHO wherein n varies from 2 to 20 do not prove to be stable as they would tend to polymerize, it is possible anyway to use compounds of formula NH₂-(CH₂)ₙCH(OEt)₂ wherein the aldehydic group is present as an acetal and can be restored through hydrolysis. Examples of groups T-R^{II}-T are: diaminobutane, diaminopentane, diaminohexane, diaminoheptane, 1,4(aminoethyl)benzene, 1,4 diaminobenzene, 1-amino-4-trimetoxysilylbutane, 1-amino-4-trimetoxysilylpentane, 4-methyl(trimetoxysilyl)-benzylamine, ethylenglycol, 1,6-dihydroxyhexane, 1,4-dibromomethylbenzene.

Preferred spacers are compounds of general formula NH₂-(CH₂)ₙ-NH₂ wherein n varies from 1 to 12, more preferably from 3 to 8.

The process for the preparation of compounds according to the invention comprises the following steps:
a. introduction of an epoxy functionality on positions 2,3 of the uronic acid;
b. nitration of the epoxyheparin obtained in step a.

Though the temperature in step a. is not critical, it preferably varies between 10°C and 80°C, more preferably between 40°C and 70°C; the reaction time preferably varies between 10 minutes and 3 days.

In the epoxidation reaction, the quantity of groups that reacted in comparison with the total quantity of reactive groups is indicated as a percentage. The used functionalization percentage influences whether and how heparin is bonded to the basic polymer, but it also influences the biological activity of the obtained polymer material. The preferred percentage of groups that reacts in the epoxidation reactions is comprised between 5 and 60%, more preferably 10-40%.

The nitro group can be covalently bonded to the saccharide structure either directly (e.g. through nitration of a carbon of the saccharide unit) or through a divalent radical acting as a spacer between the saccharide unit and the nitro group. Suitable spacers are divalent radicals derived from C₂-C₂₀ aliphatic or aromatic hydrocarbons, ethers, polyethers, carboxylic acids or their derivatives, and the like.

A first path to the preparation of nitro-epoxyheparin according to the invention is by direct nitration by means of a nitrating mixture. The reaction is preferably carried out by first preparing the nitrating mixture, wherein the previously dried epoxy-heparin is added in small amounts under stirring. Examples of nitrating mixtures are sulfuric acid-nitric acid, phosphoric acid-nitric acid, acetic anhydride-nitric acid, nitrous oxide-sulfuric acid. Preferred mixtures are the mixture sulfuric acid-nitric acid, also called sulfo-nitric mixture and the mixture acetic anhydride-nitric acid. More preferred mixture is the mixture acetic anhydride-nitric acid.

Using the latter mixture, the molar ratio between acetic anhydride and nitric acid can vary in a broad range and is preferably comprised between 1:1 and 1:2, more preferably between 1:1.4 and 1:1.6. The amount of nitro groups per saccharide unit also varies considerably, and the ratio in equivalents between saccharide units and nitro groups is preferably comprised between 0.2 and 1.0, more preferably comprised between 0.3 and 0.8.

Another synthetic path for the synthesis of nitro-epoxyheparin according to the invention is by haloacylation followed by nitration. In this case, it is possible to prepare first epoxy-heparin containing N-desulfated hexosamine. The N-desulfated hexosamine is then reacted with a halo anhydride such as iodoacetic anhydride, obtaining the corresponding amide in position 2 of the hexosamine. The iodine atom is then substituted with a nitro group by reaction with a suitable nitrate. By using the suitable reaction conditions, it is possible to dose the amount of N-desulfation and, consequently, the amount of nitro groups introduced.

Examples of suitable nitrates are AgNO₃ and NBu₄NO₃. It is possible to use anhydrides different from iodoacetic anhydride, such as the anhydride of a ω-halocarboxylic acid, obtaining in this way nitro-epoxyheparin having a different spacer group. Preferred halogens are iodine and bromine. More preferred is iodine. Using epoxyheparin fragments and iodoacetic anhydride as starting materials, the reaction schemein the case of non-epoxidized disaccharide unit is the following:

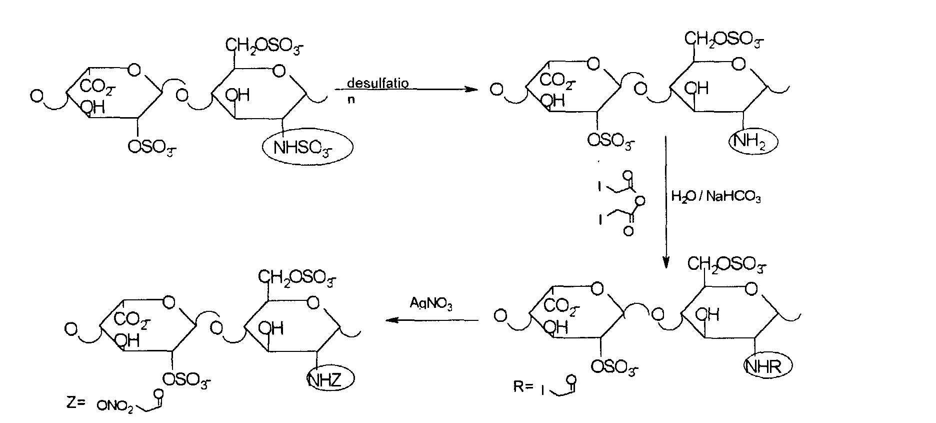

It is also possible to acylate the position 6 of desulfated hexosamine. In this case it is preferable to use compounds of formula X-(CH₂)ₙ-COY wherein X is chlorine, bromine, iodine or tosyl; preferably X is bromine; Y is chlorine, mercaptothiazole, mercaptobenzothiazole, mercaptobenzoxazole, p-nitrophenol. The reaction scheme is the following:

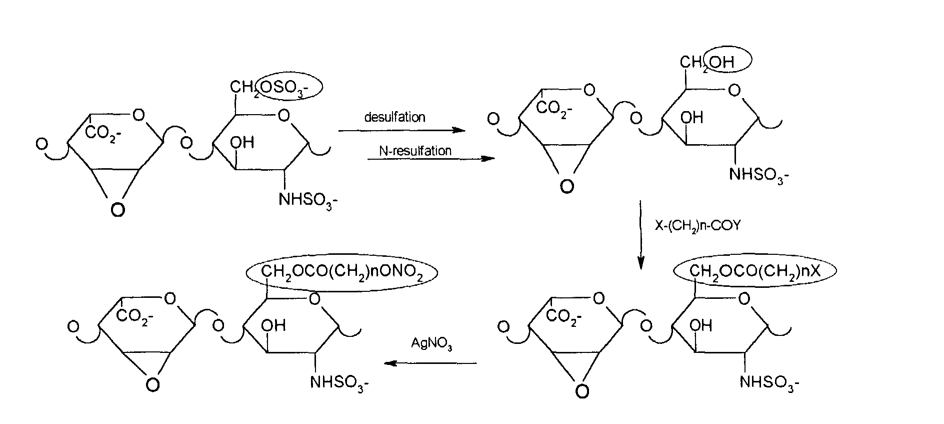

Another possible route of preparation of nitroderivatives is described in the following scheme, where the carboxyl group is activated by reaction with di cyclohexylcarbodiimide and then reacted with a compound of general formula X(CH₂)ₙY where Y is Cl, Br, I, O-tosyl, ONO₂ and X is OH or NH₂:

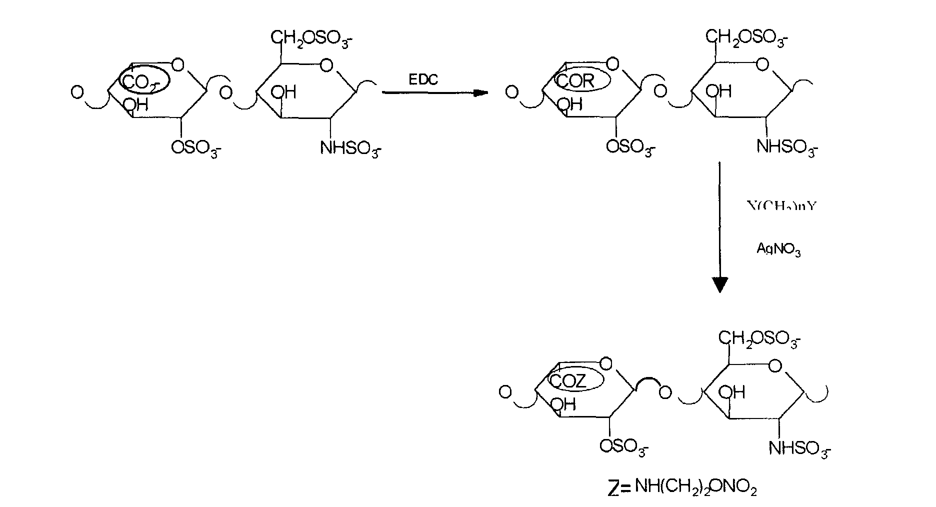

The nitro groups are measured in terms of nitro groups per saccharide ring. This ratio influences the biological activity of the obtained heparin. Depending on the final use of the compounds, it is possible to use high MW heparin (10,000<Mw<18,000), low MW heparin (3,000<Mw<10,000) or very low Mw heparin (Mw<3,000). The latter also includes heparin mimetics, i.e. synthetic oligosaccharides which reproduce sequences present in natural heparin (see for example EP 84999 and EP 300099).

The present invention is now more deeply described through examples that must be considered explanatory but that are not intended to limit in any way the invention itself.

### Experimental section

The reactions have been carried out on the following substrates:
1. epoxyheparin 30%
   5 g of heparin is dissolved in 63 ml of a solution NaOH 1 N. The solution is left under stirring stir for 45 min at 60°C, cooled and neutralized with diluted HCl. Then, the solution was dialyzed dialysis tubes with a 2000Da cut-off against water for 78 hours.
   % epoxy group: 30%
2. epoxyheparin 24%
   1 g of heparin is dissolved in 12 ml of a solution NaOH 1 N. The solution is left under stirring for 45 min at 60°C, cooled and neutralized with diluted HCl. Then, the solution was dialyzed dialysis tubes with a 2000Da cut-off against water for 78 hours.
   % epoxy group: 24%

### Example 1

### Preparation of nitro-epoxyheparin via nitration of epoxy-heparin 30% with nitro-acetic mixture

Nitroacetic mixture was prepared by dropping, over 45 minutes, 20.8 ml of cold acetic anhydride in 31.2 ml of nitric acid (90%) kept under stirring and cooled at -20°C in an N₂/acetone bath. At the end, 130 mg of HEP were added. When the temperature was stabilized, N₂/acetone bath was changed with an ice bath; the mixture was stirred 4 hours at 0° C. The mixture was poured into 100 ml of a mixture diethyl ether - n-hexane 1:1 at -40°C in an N₂/acetone bath. After 1 hour the sample is filtered, the precipitate dissolved in water, neutralized with a solution of diluited NaOH. The sample is dialyzed in dialysis tubes with a 2,000 Da cut-off against water for 78 hours. At the end, the sample is concentrated through evaporation at a reduced pressure and at a low temperature. The product is purified by gel filtration on Sephadex G25.

The product has the following characteristics:
Ethero correlate NMR spectra presence of a signal at : 83 ppm; 5,5 ppm. The amount of epoxy groups is still 23%.
Yield 72.5%
Elemental analysis: C: 22.51 %; N: 5.71 %;
   N per saccharide: 1.3
   ONO₂ per saccharide: 0.8

### Example 2

### Derivatization of nitro-epoxy-heparins with Diaminobutane.

To a 4% solution of nitro-epoxy-heparin of example 1 (50 mg in 1.25 ml of water) 12.5 µl of DAB is added and it is left for 50 hours at RT. The solution is precipitated with EtOH (4v/v), after adding 37 mg of NaCl in order to ease the precipitation. The sample is dialyzed in dialysis tubes with a 1000 Da cut-off against water for 48 hours. At the end, the sample is concentrated through evaporation at a reduced pressure and at a low temperature.

## Claims

1. Polysaccharide **characterized in that** it is constituted of heparin, heparin fragments and heparin mimetics, functionalized by introduction of nitro groups and formation of epoxy groups.

2. Polysaccharides according to claim 1 wherein the percentage of epoxidation is comprised between 5 and 60%.

3. Polysaccharide according to claims 1-2 wherein the ratio in equivalents between saccharide units and nitro groups is comprised between 0.2 and 1.0.

4. Polysaccharides according to claims 1-3 wherein the polysaccharide is heparin having Mw comprised between 10,000 and 18,000 Da.

5. Polysaccharides according to claims 1-3 wherein the polysaccharide is an heparin fragment having Mw comprised between 3,000 and 10,000 Da.

6. Polysaccharides according to claims 1-3 wherein the polysaccharide is an heparin fragment having Mw lower than 3,000 Da.

7. Polysaccharides according to claims 1-3 wherein the polysaccharide is an heparin mimetic.

8. Process for the preparation of polysaccharides according to claim 1 comprising the following steps:
a. introduction of an epoxy functionality on positions 2,3 of the uronic acid;
b. nitration of the epoxyheparin obtained in step a

9. Process according to claim 4 wherein step b. is performed using a mixture acetic anhydride-nitric acid.

10. Process according to claim 5, wherein the molar ratio between acetic anhydride and nitric acid is comprised between 1:1 and 1:2.
